# EUROPEAN PATENT APPLICATION

(11) **EP 0 836 011 A2**
(43) Date of publication of application: **15.04.1998**
(21) Application number: 97117369.5
(22) Date of filing: 08.10.1997
(51) Int. Cl.: F15B 15/08, F15B 5/00

(54) **Electropneumatic actuator**

(30) Priority: 11.10.1996 IT MI962100
(71) Applicant: Bardoni, Giacomo, 43039 Salsomaggiore Terme (Parma) (IT)
(72) Inventor: Bardoni, Giacomo, 43039 Salsomaggiore Terme (Parma) (IT)
(74) Representative: Forattini, Amelia

(57) **Abstract**

An electropneumatic actuator, particularly for actuating machines, comprises: a piston, which is rigidly coupled to a stem which can move alternately in one direction or the other in a cylinder; a ballscrew associated with the piston and actuated by a motor; a pneumatic device, suitable to act on the piston in cooperation with the ballscrew in order to perform a controlled movement of the stem in one direction and the other.

## Description

The present invention relates to an electropneumatic actuator.

Several pneumatic devices which operate by using air and oil to actuate machines in general are known. Some of these devices require, for their operation, additional items which considerably increase the bulk of the actuation stem of the assembly, while others cause seepage of oil owing to the known phenomenon of molecular cohesion along the walls on which the stem acts. In addition to this, these conventional devices require considerable maintenance with highly qualified personnel in order to eliminate air pockets in the circuit; moreover, this operation cannot always be performed at the site where these devices are used.

Some devices solve these problems by having the stem of the active piston also acting as a chamber for the oil that circulates in the device, so as to make the device more compact and less bulky indeed by virtue of the absence of the supplementary actuation items. Furthermore, the actuation piston of the device slides on a fixed stem which has channels suitable to complete the oil flow circuit, and the channels extend inside the body of the device, so as to further reduce the bulk of the entire assembly. In addition to these oil flow ducts, the corresponding exchange valves and the corresponding operation regulators are installed inside the device.

However, even these devices have some important drawbacks. It is in fact necessary to adjust the actuation speed of the piston according to the type of operation for which the device is meant; in practice, it is essential for the piston to also have a quick operating mode or stop. This is usually achieved by applying a bypass to the oil circuit, so that it hinders as little as possible the quick operation of the pneumatically-actuated piston. The solutions proposed up to now, however, are not satisfactory and further increase the bulk of the devices.

An important drawback of commercially available air-oil actuators is their adaptation to modern computerized-control systems.

Ballscrew actuators are also known. They generally have the drawback that they apply the actuation force with a certain lever arm with respect to the actuation direction, consequently generating a moment.

The aim of the present invention is to provide an actuator which can overcome the above drawbacks, allowing an efficient quick operation.

Within the scope of this aim, an object of the invention is to provide an actuator which easily adapts to the control systems of machines.

Another object of the invention is to provide an actuator which allows very precise positioning of the piston both during extension and during retraction.

Another object is to provide an actuator which operates with reduced power consumption.

Another object is to provide an actuator whose force is applied coaxially to the movement direction.

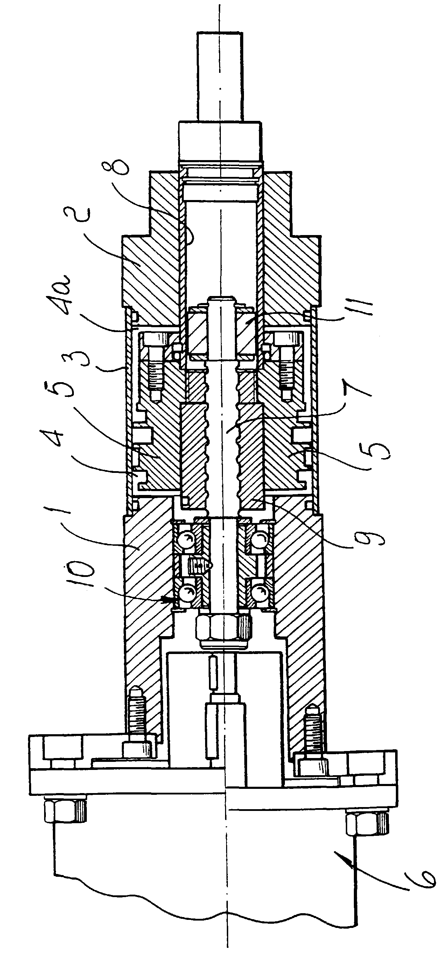

This aim, these objects and others which will become apparent hereinafter are achieved by an electropneumatic actuator, characterized in that it includes: a piston rigidly coupled to a stem which can move alternately in one direction or the other in a cylinder; a ballscrew means, associated with the piston and actuated by a motor; a pneumatic means, adapted to act on the piston; said ballscrew means being suitable to act on the piston in cooperation with the pneumatic means in order to perform a controlled movement of the stem in either direction. Further characteristics and advantages will become apparent from the description of a preferred but not exclusive embodiment of the invention, illustrated only by way of non-limitative example in the accompanying drawing, wherein the only figure is an axial sectional view of an actuator according to the invention in the intermediate position.

With reference to the above figures, the actuator includes a rear part or body 1 and a front part 2, which are mutually spaced by a rigid part 3 so as to form a chamber 4, 4a which acts as a cylinder for the sliding of a piston 5 which operates hermetically.

The piston 5 is rigidly coupled to a hollow stem 8, which can slide hermetically in the front part 2 and is rigidly coupled to a female thread 9 of a ballscrew 7.

The ballscrew 7 includes a supporting bearing 10 and is actuated by a motor 6 which is located outside the rear part 1. The ballscrew 7 has a front end 11 which can rotate freely inside the hollow stem 8.

The operation of the actuator according to the invention combines the action of the ballscrew and of the pneumatic cylinder. When the motor 6 is started in order to rotate the ballscrew 7, actuating the advancement of the female thread 9 and of the piston 5 (to the right in the figure), compressed air is fed into the chamber 4. Vice versa, in order to retract the stem 8, when the motor reverses its direction of rotation, shifting backward (or to the left relative to the figure) the female thread 9 and the piston 5, the chamber 4a is pressurized.

By virtue of the action of the pneumatic cylinder, it is possible to move very heavy loads with a compact ballscrew.

The actuator according to the invention has several advantages. Energy consumption is reduced, since it is not necessary to use a high-power electric motor because the motor is assisted by the pneumatic system. At the same time, the actuator is highly precise in operation by virtue of the ballscrew. It is in fact possible to speed up and slow down the stroke of the stem 8 according to work requirements and position it very precisely.

The actuator can advantageously be provided with all those control devices (encoders, limit switches, et cetera) that are useful for communicating with the computerized control systems currently used in machines.

In practice, it has been observed that the invention achieves the intended aim and objects, providing an actuator which is compact and highly precise in operation.

The actuator according to the invention is susceptible of numerous modifications and variations, all of which are within the scope of the inventive concept; all the details may furthermore be replaced with other technically equivalent elements.

The materials used, as well as the dimensions, may of course be any according to the requirements and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Electropneumatic actuator, characterized in that it comprises: a piston (5) rigidly coupled to a stem (8) which can move alternately in one direction or the other in a cylinder (4, 4a); a ballscrew means (7, 9), associated with said piston and actuated by a motor (6); a pneumatic means (1,2,3), adapted to act on said piston; said ballscrew means being suitable to act on said piston in cooperation with said pneumatic means in order to perform a controlled movement of said stem in either direction.

2. Actuator according to claim 1, characterized in that said ballscrew means comprises a screw (7) and a female thread (9) which is rigidly coupled to said piston.

3. Actuator according to claim 1 or 2, characterized in that said ballscrew (7) means is coaxial to said piston (5).

4. Actuator according to one or more of the preceding claims, characterized in that said pneumatic means comprises a rear body (1) and a front body (2) which are mutually spaced by a rigid part (3), so as to form a double chamber (4, 4a) which acts as a cylinder for the sliding of said piston (5), which operates hermetically.

5. Actuator according to one or more of the preceding claims, characterized in that said stem (8) is hollow and said screw (7) is at least partially accommodated in said stem.
